# EUROPÄISCHE PATENTSCHRIFT

(11) **EP 0 818 840 B1**
(45) Veröffentlichungstag und Bekanntmachung des Hinweises auf die Patenterteilung: **03.04.2002**
(21) Anmeldenummer: 96810448.9
(22) Anmeldetag: 11.07.1996
(51) Int. Cl.: H01M 8/04, H01M 8/06, F24H 1/00

(54) **Verfahren zur gleichzeitigen Erzeugung von elektrischer Energie und Wärme für Heizzwecke**
Process for generating simultaneously electrical energy and heat for heating purposes
Procédé pour produire simultanément de l'énergie électrique et de la chaleur aux fins de chauffage

(43) Veröffentlichungstag der Anmeldung: 14.01.1998
(73) Patentinhaber: Sulzer Hexis AG, 8400 Winterthur (CH)
(72) Erfinder: Lenel, Daniel, 8344 Bäretswil (CH)
(74) Vertreter: Sulzer Management AG

(56) Entgegenhaltungen:
- EP-A- 0 486 911
- EP-A- 0 654 838
- WO-A-94/18712
- DE-A- 4 446 841
- US-A- 3 146 131
- US-A- 4 683 177
- VGB KRAFTWERKSTECHNIK, Bd. 75, Nr. 6, 1.Juni 1995, Seiten 509-515, XP000512000 WINKLER W: "KRAFTWERKE MIT BRENNSTOFFZELLEN ALS NEUER KRAFTWERKSKOMPONENTE"
- EXTENDED ABSTRACTS, Bd. 87-02, 18.Oktober 1987, Seite 261/262 XP000115057 KRUMPELT M ET AL: "SYSTEMS ANALYSIS FOR HIGH-TEMPERATURE FUEL CELLS"

## Beschreibung

Die Erfindung betrifft ein Verfahren zur gleichzeitigen Erzeugung von elektrischer Energie und Heizwärme gemäss Oberbegriff von Anspruch 1 sowie eine Anlage zum Durchführen des Verfahrens.

Bei der Verwendung von Erdgas zu Heizzwecken, insbesondere zur Raumheizung und/oder Brauchwassererwärmung, wird das Gas, das mindestens rund 80% Methan enthält, in der Regel verbrannt. Dabei wird die Möglichkeit zur Erzeugung von hochwertiger Energie, insbesondere elektrischer Energie, nicht genutzt. Es ist jedoch bekannt, dass mit Brennstoffzellen bis zu 50 % der chemischen Energie von Methan in elektrische umwandelbar ist. Bei Hochtemperaturzellen kann die gleichzeitig entstehende Abwärme wirtschaftlich für Heizzwecke verwendet werden. Statt Erdgas kann auch ein Kohlenwasserstoff enthaltendes Brenngas verwendet werden, bei welchem zumindest ein Teil des Gases aus einem anderen Kohlenwasserstoff als Methan besteht.

In vielen Fällen wird ein über das ganze Jahr weitgehend konstantes Angebot an elektrischer Energie gewünscht. Wenn man beabsichtigt, mit Brennstoffzellen gleichzeitig elektrische Energie und Heizwärme zu erzeugen, so steht man in Regionen, in denen man nur während des Winters, d.h. während der kalten Jahreszeit namhafte Wärmemengen für die Raumheizung benötigt, vor dem Problem, dass im Winter grosse Mengen an elektrischer Energie erzeugbar sind, für deren wirtschaftlichen Verwendung es schwierig ist, Abnehmer zu finden. Es ist daher vorteilhaft, wenn man die Verwendung von Brennstoffzellen mit dem Einsatz von gebräuchlichen Heizgeräten, insbesondere Gasbrennern kombiniert. Während der warmen Jahreszeit kann dann allein die Brennstoffzelle betrieben werden; die entstehende Abwärme kann für die Brauchwassererwärmung genutzt werden.

Es ist Aufgabe der Erfindung, für eine derartige Kombination, welche die Verwendung von Brennstoffzellen und Gasbrenner umfasst, ein Verfahren zu schaffen, das besonders im Winter eine grosse Menge an Heizwärme verfügbar macht, wobei die gleichzeitige Elektrizitätserzeugung der Brennstoffzellen auf dem maximal möglichen Leistungsniveau durchgeführt werden soll. Die erfindungsgemässe Lösung dieser Aufgabe ist in Anspruch 1 definiert.

Das Verfahren zur gleichzeitigen Erzeugung von elektrischer Energie und Heizwärme verwendet ein hauptsächlich aus einem oder mehreren Kohlenwasserstoffen bestehendes Brenngas sowie ein Sauerstoff enthaltendes Gasgemisch. Das Verfahren wird mittels mindestens eines Gasbrenners und mindestens einer Brennstoffzellenbatterie durchgeführt, wobei in der Batterie ein Sauerstoffüberschuss bei einem stöchiometrischen Verhältnis grösser als rund 3 vorgesehen ist. In der Batterie wird für die Elektrizitätserzeugung weniger als die Hälfte des Brenngases unter Bildung eines ersten Abgases umgesetzt. Der übrige Teil des Brenngases wird in dem Brenner unter Bildung eines zweiten Abgases verbrannt und dabei das erste Abgas zumindest teilweise als Sauerstoffquelle verwendet. Aus den Abgasen wird Heizwärme gewonnen, wobei mindestens rund die Hälfte des in den Abgasen enthaltenen Wassers auskondensiert wird.

Der zweite unabhängige Anspruch 8 bezieht sich auf eine Anlage, mit der das erfindungsgemässe Verfahren durchführbar ist.

Die genannte Brennstoffzellenbatterie umfasst mit Vorteil einen Stapel von planaren Zellen, der in einer wärmedämmenden Hülle angeordnet ist, wobei in der Hülle ein Kanalsystem enthalten ist, in dem die zugeführte Luft vorgewärmt wird. Dem Stapel, der beispielsweise zentralsymmetrisch ausgebildet ist, ist ein Prereformer für das Brenngas vorgeschaltet, in dem in Anwesenheit von Wasser und unter Wärmeaufnahme die Kohlenwasserstoffe, insbesondere Methan, in Kohlenmonoxid und Wasserstoff umgesetzt werden. Die Brennstoffzellen müssen mit einem relativ grossen Luftüberschuss betrieben werden, damit keine schädlichen Temperaturgradienten auftreten. Das stöchiometrische Verhältnis muss grösser als rund 3 sein; d.h im Fall, dass das Brenngas Methan enthält, muss für die Umsetzung des Methans in Kohlendioxid und Wasser pro Mol Methan statt 2 Mol mindestens rund 6 Mol Sauerstoff zur Verfügung gestellt werden.

Damit eine möglichst grosse Menge an Heizwärme verfügbar ist, wird bei der Wärmeentnahme aus den Abgasen des Brenners und der Batterie erfindungsgemäss auch der reichlich auftretende Wasserdampf mindestens rund zur Hälfte auskondensiert, so dass die Kondensationswärme genutzt wird. Da das Abgas der Batterie einen beträchtlichen Anteil an Sauerstoff enthält, kann dieser bei der Verbrennung im Brenner verwendet werden. Dabei ist es wesentlich für die Erfindung, dass der in diesem Abgas enthaltene Wasserdampf auch als Bestandteil des Brennerabgases in Erscheinung tritt und somit weiterhin für die Wärmenutzung zur Verfügung steht.

Die abhängigen Ansprüche 2 bis 7 beziehen sich auf vorteilhafte Ausführungsformen des erfindungsgemässen Verfahrens. Gegenstand der Ansprüche 8 bis 13 ist eine Anlage zum Durchführen des erfindungsgemässen Verfahrens.

Nachfolgend wird die Erfindung anhand der Zeichnungen erläutert. Es zeigen:
- Fig. 1: eine Brennstoffzellenbatterie,
- Fig. 2: eine Anlage, mit der das erfindungsgemässe Verfahren durchführbar ist,
- Fig. 3: Veranschaulichungen der in der Batterie und in dem Gasbrenner ablaufenden Reaktionen,
- Fig. 4: ein Schaltschema zu der Anlage gemäss Fig.2,
- Fig.5, 6: je ein Schaltschema zu zwei weiteren erfindungsgemässen Anlagen und
- Fig.7: ein Schaltschema zu einer Anlage mit einer Lambda-Sonde.

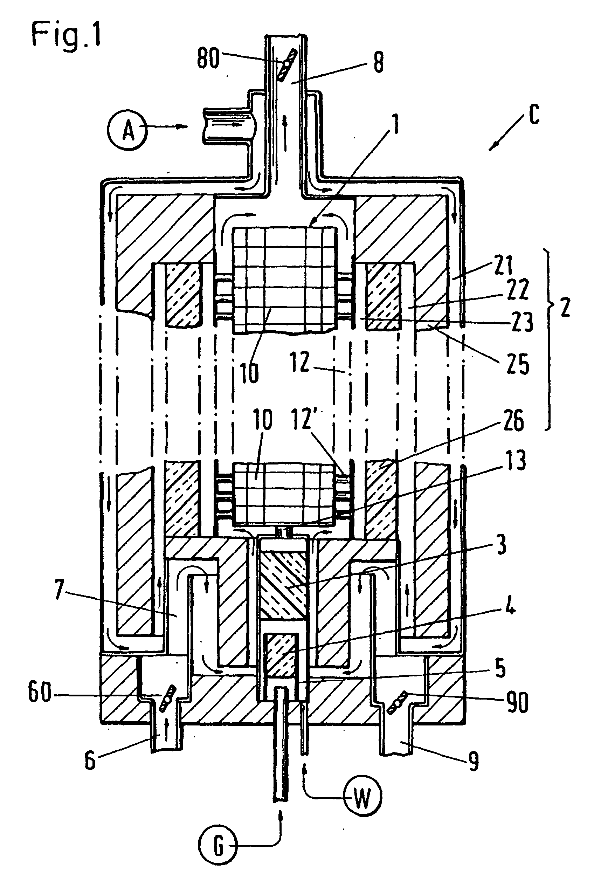

Die Brennstoffzellenbatterie C in Fig.1 ist als Beispiel zu verstehen. Ein anderes Beispiel ist in der EP-A-0 814 526 beschrieben. Dort sind auch weitere Einzelheiten offenbart, auf die hier nicht eingegangen wird.

Die Batterie C umfasst einen Stapel 1 von im wesentlichen zentralsymmetrischen Hochtemperatur-Brennstoffzellen 10, einen Prereformer 3, einen Schwefelabsorber 4 und eine Hülle 2. Ein erstes Kanalsystem der Hülle 2 weist folgende Teile auf: ringspaltartige Räume 21, 22 sowie 23, einen luftundurchlässigen Körper 25 aus einem wärmedämmenden Material und einen luftdurchlässigen Körper 26, der einen radialen Luftzustrom aus dem Raum 22 in den Raum 23 ermöglicht. Über Röhrchen 12' kann Luft aus dem Raum 23 durch einen Nachverbrennungsraum 12 in die Zellen 10 eingespeist werden. Ein zweites Kanalsystem 7 im unteren Teil der Batterie C stellt einen Wärmetauscher dar, mittels dessen dem Prereformer 3 und dem Schwefelabsorber 4 Wärme zuführbar ist. Ein ringspaltförmiger Mantelraum 5 um den Schwefelabsorber 4 ist als Verdampfer für Wasser W ausgebildet.

Das für die stromliefernden Reaktionen benötigte Brenngas G wird über den Absorber 4, den Prereformer R und eine Leitung 13 zentral in den Zellenstapel 1 eingespeist.

Während einer Anfahrphase wird zur Aufheizung der Batterie C in diese ein heisses Verbrennungsgas durch ein Rohr 6 zugeführt. Nach Durchströmen des zweiten Kanalsystems 7 und des Nachverbrennungsraums 12 verlässt das Verbrennungsgas die Batterie C durch ein Rohr 8. Nach dem Aufheizen kann die Batterie C in einen stromliefernden Betriebszustand gebracht werden. Während dieses Betriebszustandes strömt heisses Abgas aus dem Nachverbrennungsraum 12 in umgekehrter Richtung durch das zweite Kanalsystem 7 zu einem Ausgang 9. Dabei liefert das Abgas die im Prereformer 3 und Verdampfer 5 benötigte Wärme. Die Strömung des heissen Verbrennungsgases bzw. des Abgases wird mit den Absperrorganen 60, 80 und 90 (Klappen) gesteuert.

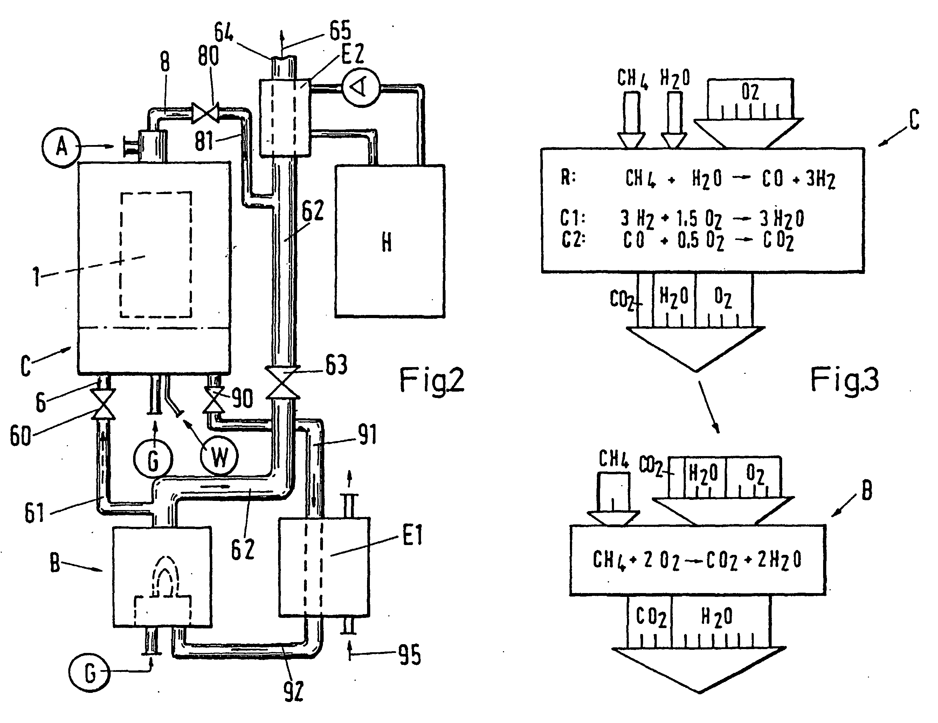

In der erfindungsgemässen Anlage der Fig.2 ist die Batterie C mit einem Gasbrenner B in einer besonderen Weise kombiniert. Während des stromliefernden Betriebszustandes wird das Abgas der Batterie C über eine Leitung 91 in einen ersten Wärmetauscher E1, beispielsweise einen Erwärmer für Brauchwasser 95 geleitet und anschliessend - Leitung 92 - in den Brenner B eingespeist, wo der im Abgas enthaltene Sauerstoff für die Verbrennung von Gas G verwendet wird. (Bei einer Brauchwassererwärmung wird mit Vorteil ein Speicher, nämlich ein Boiler verwendet, in dem bei Entnahme von erwämtem Wasser frisches Wasser unten in den Boiler nachströmt. Die Erwärmung und Entnahme des Wassers wird dabei auf bekannte Weise so durchgeführt, dass eine untere kalte und eine obere warme Zone koexistieren.) Das Verbrennungsgas des Brenners B - Leitung 62 - wird durch einen zweiten Wärmetauscher E2 geleitet und die dort gewonnene Wärme für eine Raumheizung H genutzt. Erfindungsgemäss ist vorgesehen, dass im Wärmetauscher E2 Wasserdampf des Verbrennungsgases auskondensiert wird. Über die Leitung 64 wird das abgekühlte Verbrennungsgas 65 einem nicht dargestellten Kamin zugeführt.

Für das Aufheizen während der Anfahrphase kann Verbrennungsgas, das mit dem Brenner B erzeugbar ist, über die Leitung 61 der Batterie C zugeführt werden - bei offenen Absperrorganen 60 und 80 sowie geschlossenen Absperrorganen 63 und 90. Das abgekühlte Verbrennungsgas gelangt über die Leitung 81 in die zum Wärmetauscher E2 führende Leitung 62. Bei der Verwendung des Brenners B für das Aufheizen der Batterie C muss Luft direkt aus der Umgebung entnommen werden (in Fig.2 nicht gezeigt).

In der Fig.3 ist in der oberen Hälfte dargestellt, dass in der Batterie C die Edukte Methan, Wasser und Sauerstoff über die Reaktionen R, C1 und C2 in die Produkte Kohlendioxid und Wasser umgesetzt werden, die mit dem Abgas aus der Batterie austreten. Im vorliegenden Beispiel wird Sauerstoff in dreifacher Menge bezüglich dem stöchimetrischen Bedarf eingespeist. Der unverbrauchte Anteil des Sauerstoffs erscheint in Fig.3 auch als Teil des Abgases.

Die Reaktion R, nämlich eine Reformierung, wandelt Methan in die elektrochemisch verwertbaren Zwischenprodukte Wasserstoff und Kohlenmonoxid um. Eine entsprechende Reformierung ist auch bei der Verwendung anderer Kohlenwasserstoffe möglich. Die Reaktionen C1 und C2 sind die elektrochemischen Reaktionen, aufgrund derer die elektrische Energie erzeugt wird. Zusammen mit dem Sauerstoff durchströmen weitere Luftbestandteile (Stickstoff) die Batterie, die der Übersichtlichkeit halber in der Fig.3 nicht dargestellt sind.

In der unteren Hälfte der Fig.3 ist eine im Brenner B stattfindende Verbrennung dargestellt, nämlich die Verbrennung von Methan unter Verwendung des Abgases der Batterie C gemäss dem Verfahren der in Fig.2 gezeigten Anlage. Das erzeugte Verbrennungsgas enthält auf 3 Teile CO₂ 7 Teile H₂O, wobei 1 Teil CO₂ und 3 Teile H₂O bereits mit dem Abgas der Batterie C dem Brenner B zugeführt worden sind. Anhand der Fig.3 wird anschaulich klar, dass Wasserdampf eine wesentliche Komponente der Abgase ist. Das erfindungsgemässe Verfahren ist besonders vorteilhaft, da der im Batterieabgas enthaltene Wasserdampf als Bestandteil des Brennerabgases in Erscheinung tritt und somit auch für die Wärmenutzung zur Verfügung steht.

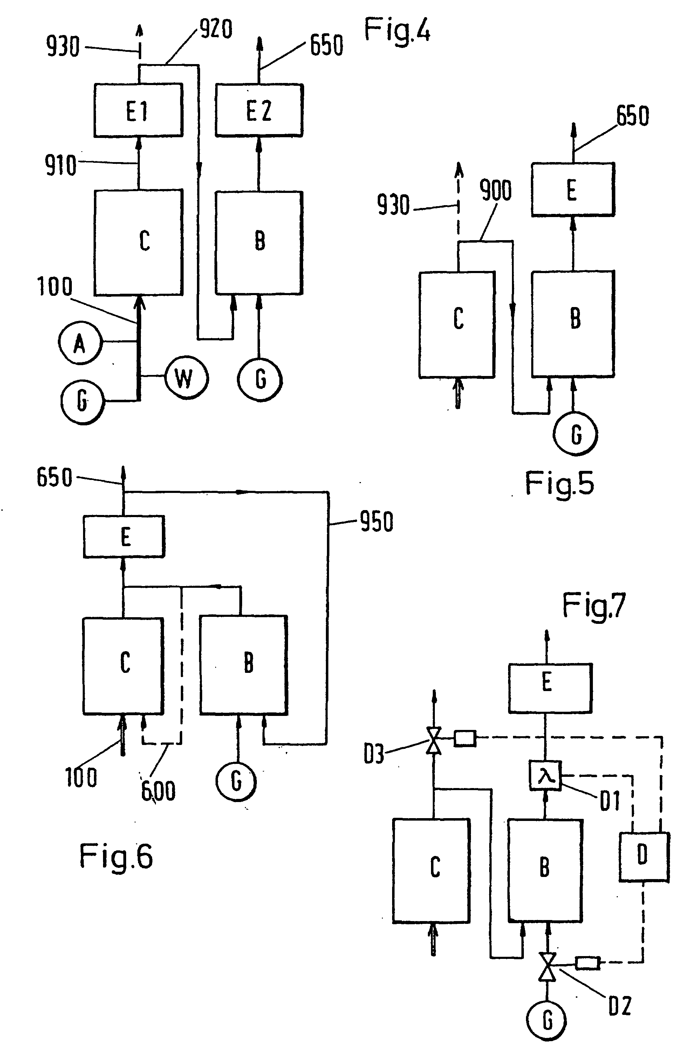

Die Schaltschemata der Figuren 4 bis 6 zeigen drei Beispiele für erfindungsgemässe Anlagen, in denen eine Batterie C, ein Brenner B und ein oder zwei Wärmetauscher E bzw. E1 und E2 kombiniert sind. In der Batterie C wird ein erstes Abgas gebildet, in dem Brenner B ein zweites Abgas.

Die Kombination der Fig.4 entspricht der Anlage der Fig.2. Mit dem Pfeil 100 ist vereinfacht die Zufuhr der Medien Luft A, Gas G und Wasser W symbolisiert, wobei diese Medien in Wirklichkeit an verschiedenen Stellen in die Batterie B eingespeist werden. Die Verbindungen 910 und 920 entsprechen den Leitungen 91 bzw. 92 in Fig.2. Der gestrichelte Pfeil 930 deutet an, dass das erste Abgas nicht gesamthaft dem Brenner B zugeführt werden muss. Bei einem grossen Luftüberschuss in der Batterie C ist es von Vorteil, wenn nur ein Teil des ersten Abgases im Brenner B verwendet wird. Der Pfeil 650 entspricht dem Pfeil 65 in Fig.2 und stellt den zu einem Kamin geführten Abgasstrom dar. In dem ersten Wärmetauscher E1 wird vorzugsweise keine Kondensation des Wasserdampfes vorgenommen. Die Kondensation erfolgt aus dem zweiten Abgas im zweiten Wärmetauscher E2.

Fig.5 zeigt weitgehend die gleiche Schaltung wie Fig.4. Der Unterschied liegt darin, dass das erste Abgas über die Verbindung 900 direkt in den Brenner B gefördert wird, ohne dass eine Wärmeentnahme in einem ersten Wärmetauscher stattfindet. Die erfindungsgemässe Wärmenutzung erfolgt in dem einzigen Wärmetauscher E.

In der Anlage der Fig.6 werden die Abgase der Batterie und des Brenners als Mischung dem einzigen Wärmetauscher E zugeführt. Ein Teil des abgekühlten Abgases wird über die Verbindung 950 in den Brenner B zurückgeführt. Mit der gestrichtelten Verbindung 600 ist angedeutet, dass das Verbrennungsgas des Brenners für die Aufheizung der Batterie (Anfahrphase) verwendet werden kann.

Die Fig.7 zeigt ein Schaltschema zu einer Anlage mit einer Lambda-Sonde D1, die dem Brenner B nachgeschaltet ist und mit welcher der Sauerstoffgehalt im Abgas gemessen werden kann. Diese Sonde ist eine Komponente eines Regelungssystems, das mittels einer Logikschaltung D die Zufuhr des Brenngases (Regelorgan D2) und/oder des Abgases der Brennstoffzellen (Regelorgan D3) in den Brenner regelt. Bei der Verwendung von Erdgas sorgt das Regelungssystems mit Vorteil dafür, dass in den Brenner B pro Mol Methan mindestens 2,2 Mol molekularer Sauerstoff eingespeist wird.

Das erste Abgas, also das Abgas, das in der Brennstoffzellenbatterie entsteht, hat einen relativ niedrigen Taupunkt (Kondensationstemperatur des Wasserdampfs). Bei einem stöchiometrischen Verhältnis für den Luftüberschuss von 5 und bei einem Wirkungsgrad für die elektrische Energie von 50% liegt der Taupunkt bei 42°C. Entsprechende Zahlenpaare Luftüberschuss/Taupunkt sind: 3.63/48.3°C und 10/31.0°C. Bei einer Rücklauftemperatur eines Heizsystems, die typischerweise 30°C beträgt, kann in einem Wärmetauscher, der der Brennstoffzellenbatterie nachgeschaltet ist, nur wenig Wärme durch Wasserkondensation gewonnen werden.

Dank des erfindungsgemässen Verfahrens erscheint der im ersten Abgas enthaltene Wasserdampf im zweiten Abgas - dem Abgas des Brenners - bei einem höheren Taupunkt. Die Erhöhung des Taupunktes beträgt mehrere Grad Celsius und es gilt: je grösser der Luftüberschuss in der Batterie, desto grösser diese Erhöhung. Entsprechend dem höheren Taupunkt gewinnt man mit dem Rücklauf des genannten Heizsystems mehr Wärme durch Kondensation.

Verglichen mit einem Verfahren, bei dem als Sauerstoffquelle für den Brenner Luft direkt aus der Umgebung entnommen wird, ergibt sich eine Verbesserung des Gesamtwirkungsgrades (= Verhältnis von gewonnener Wärmeenergie plus elektrischer Energie zu Energieinhalt des Brenngases) um mehrere Prozente. Bei einem Luftüberschuss von 7 für die Batterie und 1,5 für den Brenner, bei einer Nutzung des Brenngases zu 20% in der Batterie und zu 80% im Brenner, bei einem elektrischen Wirkungsgrad von 50%, ferner bei einer Erwärmung des Rücklaufs von 30 auf 40°C in Wärmetauschern E2 (zuerst) und E1 gemäss dem Ausführungsbeispiel der Fig.4, ergibt sich eine Erhöhung des Gesamtwirkungsgrades um rund 6%. Der Taupunkt des zweiten Abgases beträgt bei diesem Beispiel 55.8°C, während er für das erste Abgas lediglich 35.1°C beträgt. Die durch Kondensation gewonnene Wärme beträgt rund 8% der totalen Nutzenergie.

## Patentansprüche

1. Verfahren zur gleichzeitigen Erzeugung von elektrischer Energie und Heizwärme mit einem hauptsächlich aus einem oder mehreren Kohlenwasserstoffen bestehenden Brenngas (G) sowie einem Sauerstoff enthaltenden Gasgemisch (A) mittels mindestens eines Gasbrenners (B) und mindestens einer Brennstoffzellenbatterie (C), wobei der Brenner (B) eine von der Batterie (C) separate Einrichtung bildet, und in der Batterie ein Sauerstoffüberschuss mit einem stöchiometrischen Verhältnis grösser als rund 3 vorgesehen ist,
**dadurch gekennzeichnet, dass** in der Batterie für die Elektrizitätserzeugung weniger als die Hälfte des Brenngases unter Bildung eines ersten Abgases umgesetzt wird, dass der übrige Teil des Brenngases in dem Brenner unter Bildung eines zweiten Abgases verbrannt wird, dass für die Verbrennung das erste Abgas zumindest teilweise als Sauerstoffquelle verwendet wird und dass aus den Abgasen Heizwärme gewonnen wird, wobei mindestens rund die Hälfte des in den Abgasen enthaltenen Wassers auskondensiert wird.

2. Verfahren nach Anspruch 1, **dadurch gekennzeichnet, dass** das Brenngas (G) hauptsächlich aus Methan besteht, dass das den Sauerstoff enthaltende Gasgemisch Luft (A) ist und dass in der Batterie (C) pro Mol Methan mindestens rund 6 Mol molekularer Sauerstoff sowie 1 Mol Wasser (W) eingespeist werden.

3. Verfahren nach Anspruch 2, **dadurch gekennzeichnet, dass** in den Brenner (B) pro Mol Methan mindestens 2,2 Mol molekularer Sauerstoff eingespeist wird.

4. Verfahren nach einem der Ansprüche 1 bis 3, **dadurch gekennzeichnet, dass** mindestens ein Teil des ersten Abgases ohne vorherige Wärmeentnahme dem Brenner (B) zugeführt wird.

5. Verfahren nach einem der Ansprüche 1 bis 3, **dadurch gekennzeichnet, dass** das erste Abgas von der Batterie (C) in einen Wärmetauscher (E1) geführt wird, in welchem dem Abgas Wärme für Heizzwecke entnommen wird, wobei vorzugsweise kein Wasserdampf auskondensiert wird.

6. Verfahren nach einem der Ansprüche 1 bis 3, **dadurch gekennzeichnet, dass** die beiden Abgase direkt nach dem Austritt aus der Batterie (C) bzw. dem Brenner (B) vermischt werden, dieses Abgasgemisch in einen Wärmetauscher (E) geführt wird, in welchem dem Gemisch Wärme für Heizzwecke unter Kondensation von Wasserdampf entnommen wird, und dass anschliessend ein Teil des abgekühlten Gemisches für die Verbrennung in den Brenner rückgeführt wird.

7. Verfahren nach einem der Ansprüche 1 bis 6, **dadurch gekennzeichnet, dass** Verbrennungsgas des Brenners (B) während einer Anfahrphase für die Aufheizung der Brennstoffzellen (10) auf Betriebstemperatur verwendet wird.

8. Anlage zum Durchführen des Verfahrens gemäss einem der Ansprüche 1 bis 7, welche Anlage eine Brennstoffzellenbatterie (C), einen separaten Brenner (B), mindestens einen separaten Wärmetauscher (E1, E2) für Abgase, die in dem Brenner und/oder der Batterie entstehen, und mindestens ein Verbrauchersystem (H) für die Nutzung der aus den Abgasen gewonnenen Wärme umfasst, wobei der Brenner und der oder die Wärmetauscher nicht in der Batterie integriert sind und eine direkte oder indirekte Verbindung (91, 92) für Abgas von der Batterie zu dem Brenner vorgesehen ist.

9. Anlage nach Anspruch 8, **dadurch gekennzeichnet, dass** das Verbrauchersystem einen Brauchwassererwärmer (E1) und ein Raumheizungssystem (E2, H) umfasst.

10. Anlage nach Anspruch 8, **dadurch gekennzeichnet, dass** der Brauchwassererwärmer (E1) mit der Abgasleitung (91) der Batterie (C) in Wirkverbindung steht.

11. Anlage nach einem der Ansprüche 7 bis 10, **dadurch gekennzeichnet, dass** im Anschluss an den Brenner (B) eine Lambda-Sonde (D1) zur Bestimmung des Sauerstoffgehalts im Abgas vorgesehen ist und dass diese Sonde eine Komponente eines Regelungssystems (D, D1, D2, D3) ist, mit dem die Zufuhr des Brenngases und/oder des Abgases der Brennstoffzellen in den Brenner geregelt wird.

12. Anlage nach einem der Ansprüche 7 bis 11, **dadurch gekennzeichnet, dass** die Batterie (C) ein Kanalsystem (7, 12) zum Aufheizen der Batterie für eine Anfahrphase enthält und dass dieses Kanalsystem an die Abgasleitung (61, 62) des Brenners (B) anschaltbar ist.

13. Anlage nach einem der Ansprüche 7 bis 11, **dadurch gekennzeichnet, dass** die Batterie (C) einen zentralsymmetrischen Zellenstapel (1) sowie einen dem Stapel vorgeschalteten Prereformer (3) für das Brenngas (G) umfasst.

## Claims

1. Method for the simultaneous generation of electrical energy and heat for heating purposes from a fuel gas (G) consisting mainly of one or more hydrocarbons as well as a gas mixture (A) containing oxygen, by means of at least one gas burner (B) and at least one battery of fuel cells (C), with the burner (B) forming a device separate from the battery (C) and with an oxygen surplus having a stoichiometric ratio greater than about 3 being provided in the battery,
**characterised in that** less than half of the fuel gas is converted in the battery for the generation of electricity while producing a first exhaust gas; **in that** the remaining part of the fuel gas is burned in the burner while producing a second exhaust gas; **in that** the first exhaust gas is used at least partially as an oxygen source for the combustion; and **in that** heat energy is won from the exhaust gases, with at least about half of the water contained in the exhaust gases being condensed out.

2. Method in accordance with claim 1 **characterised in that** the fuel gas (G) consists mainly of methane; **in that** the gas mixture containing the oxygen is air (A); and **in that** at least about 6 moles of molecular oxygen as well as 1 mole of water (W) are fed in to the battery (C) per mole of methane.

3. Method in accordance with claim 2 **characterised in that** at least 2.2 moles of molecular oxygen per mole of methane are fed in to the burner (B).

4. Method in accordance with one of the claims 1 to 3 **characterised in that** at least a portion of the first exhaust gas is supplied to the burner (B) without prior removal of heat.

5. Method in accordance with one of the claims 1 to 3 **characterised in that** the first exhaust gas from the battery (C) is conducted into a heat exchanger (E1) in which heat for heating purposes is removed from the exhaust gas, with preferably no water vapour being condensed out.

6. Method in accordance with one of the claims 1 to 3 **characterised in that** the two exhaust gases are mixed directly on leaving the battery (C) and the burner (B) respectively, this exhaust gas mixture is conducted into a heat exchanger (E) in which heat for heating purposes is removed from the mixture while water vapour is condensed; and **in that** subsequently a portion of the cooled mixture is conducted back into the burner for the combustion.

7. Method in accordance with one of the claims 1 to 6 **characterised in that** fuel gas of the burner (B) is used for the heating of the fuel cells (10) to operating temperature during a start up phase.

8. Plant for carrying out the method in accordance with one of the claims 1 to 7, which plant comprises a battery of fuel cells (C), a separate burner (B), at least one separate heat exchanger (E1, E2) for exhaust gases which arise in the burner and/or the battery, and at least one consumer system (H) for the utilisation of the heat won from the exhaust gases, with the burner and the heat exchanger or heat exchangers not being integrated in the battery and with a direct or indirect connection (91, 92) being provided from the battery to the burner for the exhaust gas.

9. Plant in accordance with claim 8 **characterised in that** the consumer system comprises a utility water heater (E1) and a room heating system (E2, H).

10. Plant in accordance with claim 8 **characterised in that** the utility water heater (E1) stands in active contact with the exhaust gas line (91) of the battery (C).

11. Plant in accordance with one of the claims 7 to 10 **characterised in that** a lambda probe (D1) is provided at the output of the burner (B) for determining the oxygen content of the exhaust gas; and **in that** this probe is a component of the control system (D, D1, D2, D3) by means of which the supply of the fuel gas and/or of the exhaust gas from the fuel cells into the burner is regulated.

12. Plant in accordance with one of the claims 7 to 11 **characterised in that** the battery (C) contains a channelling system (7, 12) for heating up the battery during a start up phase; and **in that** this channelling system can be connected to the exhaust gas line (61, 62) of the burner (B).

13. Plant in accordance with one of the claims 7 to 11 **characterised in that** the battery (C) comprises a centrally symmetrical cell stack (1) as well as a prereformer (3) placed ahead of the stack for the fuel gas (G).

## Revendications

1. Procédé pour la production simultanée d'énergie électrique et de chaleur de chauffage avec un gaz de combustion (G) constitué essentiellement d'un ou de plusieurs hydrocarbures et avec un mélange de gaz (A) contenant de l'oxygène au moyen d'au moins un brûleur à gaz (B) et au moins une batterie de cellules électrochimiques (C), où le brûleur (B) forme une installation séparée de la batterie (C) et où il est prévu dans la batterie un excédent d'oxygène avec un rapport stoechiométrique supérieur à environ 3, **caractérisé en ce qu'**il est transformé dans la batterie pour la production d'électricité moins que la moitié du gaz de combustion en formant un premier gaz d'échappement, **en ce que** la partie restante du gaz de combustion est brûlée dans le brûleur en formant un deuxième gaz d'échappement, **en ce que** pour la combustion, le premier gaz d'échappement est utilisé au moins partiellement comme source d'oxygène et **en ce que** de la chaleur de chauffage est obtenue à partir des gaz d'échappement, où au moins environ la moitié de l'eau se trouvant dans les gaz d'échappement est évacuée par condensation.

2. Procédé selon la revendication 1, **caractérisé en ce que** le gaz de combustion (G) est constitué essentiellement de méthane, **en ce que** le mélange de gaz contenant l'oxygène est de l'air (A) et **en ce que** sont introduites dans la batterie (C) par mole de méthane au moins environ 6 moles d'oxygène moléculaire et 1 mole d'eau (W).

3. Procédé selon la revendication 2, **caractérisé en ce qu'**il est introduit dans le brûleur (B) par mole de méthane au moins 2,2 moles d'oxygène moléculaire.

4. Procédé selon l'une des revendications 1 à 3, **caractérisé en ce qu'**au moins une partie du premier gaz d'échappement est amenée sans prélèvement de chaleur préalable au brûleur (B).

5. Procédé selon l'une des revendications 1 à 3, **caractérisé en ce que** le premier gaz d'échappement est guidé de la batterie (C) dans un échangeur de chaleur (E1) dans lequel est prélevé du gaz d'échappement de la chaleur dans des buts de chauffage, où de préférence, la vapeur d'eau n'est pas évacuée par condensation.

6. Procédé selon l'une des revendications 1 à 3, **caractérisé en ce que** les deux gaz d'échappement sont mélangés directement après la sortie de la batterie (C) respectivement du brûleur (B), que ce mélange de gaz d'échappement est guidé dans un échangeur de chaleur (E) dans lequel est prélevé du mélange de la chaleur dans des buts de chauffage sous condensation de vapeur d'eau et **en ce qu'**il est ramené ensuite une partie du mélange refroidi pour la combustion dans le brûleur.

7. Procédé selon l'une des revendications 1 à 6, **caractérisé en ce que** le gaz de combustion du brûleur (B) est utilisé pendant une phase de démarrage pour l'échauffement des cellules électrochimiques (10) à la température de fonctionnement.

8. Installation pour la mise en oeuvre du procédé selon l'une des revendications 1 à 7, cette installation comprenant une batterie de cellules électrochimiques (C), un brûleur séparé (B), au moins un échangeur de chaleur séparé (E1, E2) pour les gaz d'échappement produits dans le brûleur et/ou la batterie, et au moins un système consommateur (H) pour l'utilisation de la chaleur obtenue à partir des gaz d'échappement, où le brûleur et le ou les échangeurs de chaleur ne sont pas intégrés dans la batterie et où il est prévu une liaison directe ou indirecte (91, 92) pour le gaz d'échappement de la batterie au brûleur.

9. Installation selon la revendication 8, **caractérisée en ce que** le système consommateur comprend un dispositif de chauffage d'eaux industrielles (E1) et un système de chauffage de pièces (E2,H).

10. Installation selon la revendication 8, **caractérisée en ce que** le dispositif de chauffage des eaux industrielles (E1) est en liaison active avec le conduit de gaz d'échappement (91) de la batterie (C).

11. Installation selon l'une des revendications 7 à 10, **caractérisée en ce qu'**il est prévu à la suite du brûleur (B) une sonde lambda (D1) pour déterminer la teneur en oxygène dans le gaz d'échappement, et **en ce que** cette sonde est un composant d'un système de réglage (D,D1,D2,D3) au moyen duquel est réglée l'amenée du gaz de combustion et/ou du gaz d'échappement des cellules électrochimiques au brûleur.

12. Installation selon l'une des revendications 7 à 11, **caractérisée en ce que** la batterie (C) comprend un système à canaux (7, 12) pour chauffer la batterie pour une phase de démarrage, et **en ce que** ce système à canaux peut être raccordé au conduit de gaz d'échappement (61,62) du brûleur (B).

13. Installation selon l'une des revendications 7 à 11, **caractérisée en ce que** la batterie (C) comprend une pile' de cellules centrale-symétrique (1) ainsi qu'un préreformeur (3) disposé en amont de la pile pour le gaz de combustion (G).
